# EUROPÄISCHE PATENTSCHRIFT

(11) **EP 2 605 927 B1**
(45) Veröffentlichungstag und Bekanntmachung des Hinweises auf die Patenterteilung: **05.11.2014**
(21) Anmeldenummer: 12756516.6
(22) Anmeldetag: 12.09.2012
(51) Int. Cl.: B60K 6/442, B60K 17/02, B60K 6/387, B60K 6/48, F16H 3/00, F16H 37/06, B60K 6/547

(54) **KFZ-ANTRIEBSSTRANG UND VERFAHREN ZUM BETREIBEN EINES ANTRIEBSSTRANGES**
MOTOR VEHICLE DRIVE TRAIN AND METHOD FOR OPERATING A DRIVE TRAIN
CHAÎNE CINÉMATIQUE POUR VÉHICULE AUTOMOBILE ET PROCÉDÉ DE FONCTIONNEMENT D'UNE CHAÎNE CINÉMATIQUE

(30) Priorität: 12.09.2011 DE 102011113288
(43) Veröffentlichungstag der Anmeldung: 26.06.2013
(73) Patentinhaber: GETRAG Getriebe- und Zahnradfabrik Hermann Hagenmeyer GmbH & Cie KG, 74199 Untergruppenbach (DE)
(72) Erfinder: MOOSMANN, Hans-Peter, 78144 Schramberg (DE); WOLF, Klaus-Dieter, 74199 Untergruppenbach (DE)
(74) Vertreter: Witte, Weller & Partner Patentanwälte mbB
(86) Internationale Anmeldenummer: PCT/EP2012/067811
(87) Internationale Veröffentlichungsnummer: WO 2013/037810

(56) Entgegenhaltungen:
- EP-A2- 2 019 229
- DE-A1- 10 305 639
- DE-A1- 19 917 724
- DE-A1-102004 046 008
- DE-A1-102007 030 091

## Beschreibung

Die vorliegende Erfindung betrifft einen Antriebsstrang für ein Kraftfahrzeug, mit einer Antriebseinheit, die einen Antriebsmotor aufweist, einem Stufengetriebe, das einen Getriebeeingang und ein erstes Teilgetriebe sowie ein zweites Teilgetriebe aufweist, und mit einer Leistungsverzweigungseinrichtung, die Antriebsleistung auf eine erste und eine zweite Antriebswelle einer angetriebenen Achse verteilt.

Ein derartiger Antriebsstrang ist beispielsweise in Form eines so genannten Doppelkupplungsgetriebes aus dem Dokument EP-A-2 019 229 bekannt. Bei dieser Art von Antriebsstrang ist der Antriebsmotor mit dem Stufengetriebe über eine Doppelkupplungsanordnung verbunden, wie es beispielsweise in dem Dokument DE 103 05 639 A1 offenbart ist. Ein Ausgang des Stufengetriebes ist mit einer Leistungsverzweigungseinrichtung in Form eines mechanischen Differentials verbunden.

Bei dieser Art von Antriebsstrang ist der Getriebeeingang durch zwei zueinander konzentrische Wellen gebildet, die mit den jeweiligen Teilgetrieben verbunden sind. Das mechanische Differential ermöglicht kein so genanntes Torque-Vectoring, also keine unterschiedliche Verteilung von Drehmomenten auf die angetriebenen Räder der angetriebenen Achse.

Ein derartiges Konzept ist aus dem Dokument DE 39 00 638 C2 bekannt. Hierbei ist ein Ausgang eines Stufengetriebes mit einem mechanischen Differential sowie über Übersetzungsstufen und unabhängig für die zwei Antriebswellen ansteuerbaren Reibkupplungen mit den Antriebswellen verbunden. Durch Ansteuern einer der Reibkupplungen während einer Kurvenfahrt kann das kurvenäußere Rad mit einer höheren Drehzahl angetrieben werden, um den Torque-Vectoring-Effekt zu erzielen.

Ferner ist aus dem Dokument DE 10 2004 046 008 A1 ein Antriebsstrang bekannt, bei dem eine Leistungsverzweigungseinrichtung einer angetriebenen Achse anstelle eines mechanischen Differentials zwei Reibkupplungen aufweist, die unabhängig voneinander ansteuerbar sind. Mit einem derartigen Antriebsstrang können die angetriebenen Räder einer angetriebenen Achse mit unterschiedlichen Drehmomenten beaufschlagt werden, um ein Torque-Vectoring zu erreichen. Eine Erhöhung der Drehzahl des kurvenäußeren Rades ist jedoch nur bei einem Allrad-Antriebsstrang denkbar, bei dem diese Art von Doppelkupplungs-Differential als Hang-on-Kupplung ausgebildet ist, die über eine höhere Übersetzung als die andere angetriebene Achse in den Leistungsfluss schaltbar ist.

Die oben genannten Antriebsstränge werden insbesondere in Verbindung mit Antriebsmotoren in Form von Verbrennungsmotoren verwendet. Dabei ist es bekannt, herkömmliche Antriebsstränge zusätzlich mit einer oder mehreren elektrischen Maschinen auszurüsten, um einen Hybrid-Antriebsstrang einzurichten.

Ferner ist aus dem Dokument DE 199 17 724 A1 ein Antriebsstrang bekannt, der für einen alleinigen Antrieb durch eine elektrische Maschine ausgelegt ist. Der Antriebsstrang weist ein Stufengetriebe mit zwei Übersetzungen auf, wobei die Übersetzungen durch Radsätze gebildet sind. Die Losräder dieser Radsätze sind über Reibkupplungen in den Leistungsfluss schaltbar, so dass zugkraftunterbrechungsfreie Gangwechsel bzw. Gangwechsel unter Last durchgeführt werden können. Der Ausgang des Stufengetriebes ist direkt mit einem mechanischen Differential gekoppelt, das die Antriebsleistung in herkömmlicher Weise auf die zwei Antriebswellen verteilt.

Vor dem obigen Hintergrund ist es eine Aufgabe der vorliegenden Erfindung, einen verbesserten Antriebsstrang sowie ein verbessertes Verfahren zum Betreiben eines Antriebsstranges anzugeben.

Die obige Aufgabe wird zum einen gelöst durch einen Antriebsstrang gemäß Anspruch 1 wobei der Antriebsmotor direkt mit dem Getriebeeingang verbunden ist, wobei jeder der zwei Antriebswellen eine erste und eine zweite Reibkupplung zugeordnet ist, wobei die ersten Reibkupplungen die jeweilige Antriebswelle mit dem ersten Teilgetriebe verbinden und wobei die zweiten Reibkupplungen die jeweilige Antriebswelle mit dem zweiten Teilgetriebe verbinden, derart, dass die ersten Reibkupplungen und die zweiten Reibkupplungen die Leistungsverzweigungseinrichtung bilden.

Ferner wird die obige Aufgabe gelöst durch ein Verfahren zum Betreiben eines solchen Antriebsstranges gemäß Anspruch 1, wobei beide Teilgetriebe eine Anfahrgangstufe mit der gleichen Übersetzung aufweisen, wobei ein Anfahrvorgang durch gleichzeitiges Schließen der ersten und der zweiten Reibkupplung erfolgt.

Schließlich wird die obige Aufgabe gelöst durch ein Verfahren zum Betreiben eines Antriebsstranges der oben genannten Art, wobei der Antriebsstrang eine Antriebseinheit, ein Getriebe mit einem ersten und einem zweiten Teilgetriebe sowie eine angetriebene Achse mit einer ersten Antriebswelle und einer zweiten Antriebswelle aufweist, wobei jeder der zwei Antriebswellen eine erste und eine zweite Reibkupplung zugeordnet ist, wobei die ersten Reibkupplungen die jeweilige Antriebswelle mit dem ersten Teilgetriebe verbinden, und wobei die zweiten Reibkupplungen die jeweilige Antriebswelle mit dem zweiten Teilgetriebe verbinden, mit dem Schritt, bei einer Kurvenfahrt die eine Antriebswelle über die erste Reibkupplung und das erste Teilgetriebe mit der Antriebseinheit zu verbinden und die andere Antriebswelle über die zweite Reibkupplung und das zweite Teilgetriebe mit der Antriebseinheit zu verbinden.

Bei dem erfindungsgemäßen Antriebsstrang ist insbesondere zwischen dem Antriebsmotor und dem Getriebeeingang keine Trennkupplungsanordnung vorgesehen. Vielmehr sind der Antriebsmotor und der Getriebeeingang direkt bzw. drehfest miteinander verbunden. Gegebenenfalls kann diese Verbindung ein Zweimassenschwungrad beinhalten, was im vorliegenden Fall als direkte bzw. drehfeste Verbindung angesehen wird.

Stattdessen ist der Ausgang der zwei Teilgetriebe mit einer Kupplungsanordnung verbunden, und zwar derart, dass der Ausgang des ersten Teilgetriebes über eine erste Reibkupplung mit der ersten Antriebswelle oder über eine weitere erste Reibkupplung mit der zweiten Antriebswelle verbindbar ist. Ferner ist der Ausgang des zweiten Teilgetriebes über eine zweite Reibkupplung mit der ersten Antriebswelle verbindbar, und der Ausgang des zweiten Teilgetriebes ist über eine weitere zweite Reibkupplung mit der zweiten Antriebswelle verbindbar.

Die Kupplungsanordnung beinhaltet folglich vier Reibkupplungen. Die Reibkupplungen sind dabei jeweils als Lastschaltkupplungen ausgebildet und können jeweils offen oder geschlossen sein. Ferner können die Reibkupplungen vorzugsweise jeweils so angesteuert werden, dass sie ein bestimmtes Drehmoment übertragen, also auch schlupfend betrieben werden.

Gangwechsel zwischen dem ersten Teilgetriebe und dem zweiten Teilgetriebe können folglich unter Last erfolgen, wobei die ersten Reibkupplungen und die zweiten Reibkupplungen nach der Art eines Doppelkupplungsgetriebes betrieben werden. Wenn beispielsweise ein Gangwechsel von einem Quellgang des ersten Teilgetriebes zu einem Zielgang des zweiten Teilgetriebes durchgeführt werden soll, so werden die ersten Reibkupplungen geöffnet, und die zweiten Reibkupplungen werden überschneidend hiermit geschlossen, so dass der Gangwechsel ohne Zugkrafteinbruch erfolgen kann.

Wenn im Fahrbetrieb, bei dem beispielsweise eine Gangstufe in dem ersten Teilgetriebe geschaltet ist, die beiden ersten Reibkupplungen vollständig geschlossen sind, wirkt die Kupplungseinrichtung wie eine Differentialsperre, derart, dass die den Antriebswellen zugeführten Drehmomente jeweils identisch sind. Auf µ-Split-Fahrbahnen kann hierdurch ein Anfahrvorgang so erfolgen, als wäre ein mechanisches Differential gesperrt.

Ferner können während eines solchen Fahrbetriebes die zwei ersten Reibkupplungen unabhängig voneinander angesteuert werden, derart, dass beispielsweise dem kurvenäußeren Rad während einer Kurvenfahrt ein höheres Drehmoment zugeteilt wird als dem kurveninneren Rad. Hierdurch kann eine erste Art von Torque-Vectoring-Funktion realisiert werden.

Da die oben beschriebene Kupplungsanordnung ermöglicht, jede Antriebswelle unabhängig mit dem ersten oder dem zweiten Teilgetriebe zu verbinden, ist auch eine zweite Art von Torque-Vectoring-Betrieb möglich, bei dem die eine Antriebswelle über das eine Teilgetriebe angetrieben wird und die andere Antriebswelle über das andere Teilgetriebe. Hierdurch können für die zwei angetriebenen Räder unterschiedliche Übersetzungen eingerichtet werden, so dass ein Torque-Vectoring mit Drehzahlüberhöhung am kurvenäußeren Rad realisierbar ist.

Die Aufgabe wird somit vollkommen gelöst.

Von besonderem Vorzug ist es, wenn der Antriebsmotor einen Verbrennungsmotor aufweist, insbesondere als Verbrennungsmotor ausgebildet ist.

Bei dieser Ausführungsform kann das Stufengetriebe eine Mehrzahl von vier, fünf, sechs, sieben oder mehr Gangstufen aufweisen.

Der Verbrennungsmotor ist mit seiner Kurbelwelle dabei direkt mit dem Getriebeeingang verbunden, gegebenenfalls über ein Zweimassenschwungrad zur Dämpfung von Vibrationen.

Gemäß einer weiteren bevorzugten Ausführungsform weist das erste Teilgetriebe eine erste Zwischenwelle auf, wobei Gangstufen des ersten Teilgetriebes durch Radsätze gebildet sind, die eine Getriebeeingangswelle mit der ersten Zwischenwelle verbinden, und/oder wobei das zweite Teilgetriebe eine zweite Zwischenwelle aufweist, wobei Gangstufen des zweiten Teilgetriebes durch Radsätze gebildet sind, die die Getriebeeingangswelle mit der zweiten Zwischenwelle verbinden.

Bei dieser Ausführungsform kann die erste Zwischenwelle als Ausgangswelle des ersten Teilgetriebes ausgebildet sein. Die zweite Zwischenwelle kann als Ausgangswelle des zweiten Teilgetriebes ausgebildet sein.

Die zwei Zwischenwellen sind vorzugsweise parallel zu der Getriebeeingangswelle ausgerichtet.

Bei dieser Ausführungsform kann der Grundaufbau des Stufengetriebes ähnlich sein wie bei einem Doppelkupplungsgetriebe, wobei jedoch als Getriebeeingangswelle eine einzelne Getriebeeingangswelle vorgesehen ist, die sowohl eine Eingangswelle für das erste als auch für das zweite Teilgetriebe bildet.

Die Radsätze können dabei in an sich bekannter Weise schaltbar ausgebildet sein, insbesondere durch Schaltkupplungen wie Synchronschaltkupplungen bzw. Sperr-Synchronschaltkupplungen. Die Schaltkupplungen können für benachbarte Radsätze zu Schaltkupplungspaketen zusammengefasst werden, wie es im Stand der Technik dem Grunde nach ebenfalls bekannt ist.

Die Schaltkupplungen sind dabei vorzugsweise an den Zwischenwellen angeordnet, können jedoch gegebenenfalls auch an der Getriebeeingangswelle angeordnet sein.

Ferner ist es bevorzugt, wenn die ersten Reibkupplungen koaxial zu einer Welle des ersten Teilgetriebes angeordnet sind und/oder wenn die zweiten Reibkupplungen koaxial zu einer Welle des zweiten Teilgetriebes angeordnet sind.

Bei dieser Ausführungsform sind die jeweiligen Wellen der Teilgetriebe jeweils vorzugsweise mit Eingangsgliedern der jeweiligen Reibkupplungen verbunden.

Ausgangsglieder der Reibkupplungen sind dabei vorzugsweise über jeweilige Übersetzungsstufen (einstufig oder mehrstufig) mit den Antriebswellen verbunden.

Gemäß einer weiteren insgesamt bevorzugten Ausführungsform weist die Antriebseinheit eine elektrische Maschine zur Bereitstellung von Antriebsleistung auf, die mittels einer Schaltkupplungsanordnung mit wenigstens einem der Teilgetriebe verbindbar ist.

Bei dieser Ausführungsform ist der Antriebsstrang als Hybrid-Antriebsstrang ausgebildet. Die elektrische Maschine ist vorzugsweise mit den Ausgängen der Teilgetriebe mittels der Schaltkupplungsanordnung verbindbar. In diesem Fall ist es möglich, dass die elektrische Maschine bei Gangwechseln unter Last zur Drehmomentstützung herangezogen wird. Ferner kann bei einem derartigen Hybrid-Antriebsstrang die übliche Anzahl von Funktionalitäten eines solchen Antriebsstranges realisiert werden, wie beispielsweise Boost-Fahrbetrieb, Rekuperation, rein elektrisches Fahren, etc.

Bei einer alternativen Ausführungsform weist der Antriebsmotor eine elektrische Maschine auf bzw. ist insbesondere als elektrische Maschine ausgebildet.

Hierbei ist die elektrische Maschine direkt mit dem Getriebeeingang verbunden. Ein solcher Antriebsstrang eignet sich insbesondere für reine Elektrofahrzeuge sowie für Hybrid-Fahrzeuge, deren Antriebsstrang als "Range-Extender" ausgebildet ist.

Dabei ist von besonderem Vorzug, wenn das erste Teilgetriebe eine einzelne erste Gangstufe aufweist und/oder wenn das zweite Teilgetriebe eine einzelne zweite Gangstufe aufweist.

Für reine Elektrofahrzeuge sowie für Range-Extender-Antriebsstränge hat es sich als bevorzugt herausgestellt, wenn die Antriebsleistung der elektrischen Maschine und gegebenenfalls die des zuschaltbaren Verbrennungsmotors über zwei Gangstufen auf die angetriebene Achse übertragen werden kann. Dabei ist vorzugsweise die erste Gangstufe als Anfahrgangstufe für niedrige Geschwindigkeiten ausgebildet, und die zweite Gangstufe ist für Geschwindigkeiten bis zur Höchstgeschwindigkeit des Kraftfahrzeuges dimensioniert. Für rein elektrische Fahrzeuge ist aufgrund der Charakteristik von elektrischen Maschinen ein derartiges zweistufiges Getriebe ausreichend.

Gemäß einer besonders bevorzugten Ausführungsform weist das Stufengetriebe hierbei eine einzelne Getriebeeingangswelle auf, an der zwei Festräder für die erste Gangstufe festgelegt sind, die mit Losrädern in Eingriff stehen, die mittels der ersten Reibkupplungen in den Leistungsfluss schaltbar sind, und an der zwei weitere Festräder für die zweite Gangstufe festgelegt sind, die mit Losrädern in Eingriff stehen, die mittels der zweiten Reibkupplungen in den Leistungsfluss schaltbar sind, um Antriebsleistung auf die zwei Antriebswellen zu verteilen.

Bei dieser Ausführungsform bilden die ersten Reibkupplungen ein Doppelkupplungs-Differential für die Gangstufe 1. Die zweiten Reibkupplungen bilden ein Doppelkupplungs-Differential für die Gangstufe 2. Ferner ist es auch bei dieser Ausführungsform möglich, ein Torque-Vectoring der zweiten Art einzurichten, indem beispielsweise die linke Antriebswelle über die erste Gangstufe mit Leistung versorgt wird, und die rechte Antriebswelle über die zweite Gangstufe.

Wie oben erwähnt, ist es möglich, einen derartigen Antriebsstrang als Range-Extender-Antriebsstrang auszubilden. Hierbei ist es bevorzugt, wenn die Antriebseinheit einen Verbrennungsmotor aufweist, der mittels einer Schaltkupplungsanordnung mit dem Getriebeeingang verbindbar ist.

Hierbei ist der Verbrennungsmotor vorzugsweise mit einem Generator gekoppelt, der die Antriebsleistung des Verbrennungsmotors in elektrische Energie umsetzt, die dann wiederum dem elektrischen Antriebsmotor zugeführt wird, der mit dem Getriebeeingang verbunden ist. In einer Betriebsart ist es durch die Schaltkupplungsanordnung jedoch vorzugsweise möglich, den Verbrennungsmotor direkt mit dem Getriebeeingang zu verbinden, wobei dann naturgemäß nur zwei Gangstufen für den Verbrennungsmotorantrieb vorhanden sind.

Beispielsweise bei längeren Autobahnfahrten und bei geeigneter Übersetzung der höheren Gangstufe kann es hierbei von Vorteil sein, wenn das Fahrzeug alleine mittels des Verbrennungsmotors angetrieben wird. Auch in diesem Fall lässt sich mittels der erfindungsgemäßen Kupplungsanordnung ein Torque-Vectoring sowie eine Quer-Sperrfunktion einrichten.

Wie oben erläutert, ist es bevorzugt, wenn der Getriebeeingang eine einzelne Getriebeeingangswelle aufweist.

Dies führt gegenüber herkömmlichen Doppelkupplungsgetrieben zu erheblichen Einsparungen, da bei diesen aufwändige Hohlwellenanordnungen für den Getriebeeingang vorgesehen sind.

Insgesamt ist es ebenfalls bevorzugt, wenn beide Teilgetriebe eine Anfahrgangstufe mit der gleichen Übersetzung aufweisen, derart, dass ein Anfahrvorgang mittels der beiden ersten und mittels der beiden zweiten Reibkupplungen erfolgen kann.

Generell bedeutet das Ersetzen von getriebeeingangsseitigen Doppelkupplungen durch Kupplungen am Getriebeausgang, dass die Reibkupplungen höhere Drehmomente (übersetzt über die Gangstufen des Getriebes) übertragen müssen. Dies kann insbesondere bei den unteren Gangstufen bzw. einer Anfahrgangstufe nachteilig sein. Um die Reibkupplungen dennoch nicht jeweils einzeln für die Maximalbelastung auslegen zu müssen, die aus solchen Übersetzungsverhältnissen herrührt, ist erfindungsgemäß vorgesehen, jedem der Teilgetriebe die gleiche Anfahrgangstufe (mit der gleichen Übersetzung) zuzuordnen, so dass ein Anfahren erfolgen kann, indem alle vier Kupplungen gleichzeitig betätigt werden, so dass sich das anfallende Drehmoment auf die vier Kupplungen verteilt.

Bei dem erfindungsgemäßen Verfahren, das dieser Ausführungsform zugeordnet ist, ist es auch denkbar, ein solches Layout auch bei einem herkömmlichen Doppelkupplungsgetriebe vorzusehen, das eingangsseitige Reibkupplungen aufweist. Auch in diesem Fall ist es möglich, jedem der zwei Teilgetriebe eines solchen herkömmlichen Doppelkupplungsgetriebes die gleiche Anfahrgangstufe zuzuordnen. Auch hierbei wird eine deutliche Reduzierung der Maximalbelastung der Kupplungen erzielt, da zum Anfahren beide Kupplungen betätigt werden und sich das anfallende Drehmoment insofern auf die zwei Kupplungen aufteilt.

Ferner ist es insgesamt vorteilhaft, wenn die erste und die zweite Reibkupplung der ersten und/oder der zweiten Antriebswelle koaxial zu der ersten und/oder der zweiten Antriebswelle angeordnet sind.

Bei dieser Ausführungsform kann die erfindungsgemäße Kupplungsanordnung mit vier Kupplungen koaxial zu der angetriebenen Achse angeordnet werden, so dass sich eine hohe Bauraumersparnis ergibt.

Ferner ist es insgesamt vorteilhaft, wenn die ersten und/oder die zweiten Reibkupplungen als Anfahrkupplungen ausgelegt sind.

Wie oben erläutert, ist es bevorzugt, wenn sämtliche Reibkupplungen als Anfahrkupplungen ausgelegt sind. Es ist jedoch auch möglich, beispielsweise nur die dem ersten Teilgetriebe (dem die Anfahrgangstufe zugeordnet ist) zugeordneten ersten Reibkupplungen als Anfahrkupplungen auszulegen.

Es ist insgesamt ebenfalls vorteilhaft, wenn eines der zwei Teilgetriebe ungerade Gangstufen und das andere der zwei Teilgetriebe gerade Gangstufen aufweist.

Bei dieser Ausführungsform können Gangwechsel wie bei einem Doppelkupplungsgetriebe vollzogen werden. Während eines Fahrbetriebes über eines der zwei Teilgetriebe kann in dem anderen Teilgetriebe eine Folgegangstufe vorgewählt werden, und Gangwechsel können durch überschneidendes Betätigen der ersten und der zweiten Reibkupplungen erfolgen.

Generell eignet sich der erfindungsgemäße Antriebsstrang für den Antrieb einer angetriebenen Achse eines Kraftfahrzeuges, beispielsweise für ein front- oder ein heckangetriebenes Fahrzeug.

Generell ist es jedoch auch möglich, den erfindungsgemäßen Antriebsstrang als Allrad-Antriebsstrang auszubilden.

Hierbei ist es möglich, die erste und die zweite Antriebswelle, die an sich unabhängig voneinander drehbar sind, über ein mechanisches Differential miteinander zu koppeln, dessen Differentialkorb mit einer Längswelle verbunden ist, die mit einer zweiten angetriebenen Achse verbunden ist.

Bei dieser Ausführungsform wird ein Differential quasi umgekehrt betrieben. Die bei einem mechanischen herkömmlichen Differential vorgesehenen Eingangswellen verteilen die über den Differentialkorb zugeführte Antriebsleistung auf die Antriebswellen, nehmen bei der vorliegenden Ausführungsform hingegen die Antriebsleistung von den Antriebswellen auf und übertragen diese auf den Differentialkorb.

Der Begriff des Differentialkorbs ist vorliegend breit zu verstehen und soll sich nicht nur auf Differentialkörbe von Kegelrad-Differentialen beziehen, sondern auf jede Art von mechanischem Differential (Planetendifferential etc.), bei dem ein Eingangsglied und zwei Ausgangsglieder vorgesehen sind. Das Eingangsglied wird im vorliegenden Fall als Differentialkorb bezeichnet. Die Ausgangsglieder sind bei der vorliegenden Anwendung dabei die Eingangsglieder für den Achsantrieb zu der zweiten angetriebenen Achse.

Die zweite angetriebene Achse kann dabei ein herkömmliches mechanisches Differential zur Verteilung der Antriebsleistung auf die angetriebenen Räder der zweiten angetriebenen Achse aufweisen, oder ein Doppelkupplungs-Differential.

Insgesamt ist es ebenfalls bevorzugt, wenn Ausgangsglieder der ersten und der zweiten Reibkupplungen über eine Übersetzungsstufe mit den Antriebswellen verbunden sind.

Bei dieser Ausführungsform ist es möglich, die Reibkupplungen kompakt in das Getriebe zu integrieren. Ferner kann durch die Übersetzungsstufe erreicht werden, dass die Reibkupplungen eine deutlich geringere Drehmomentbelastung haben und insofern kleiner dimensioniert werden können.

Gemäß einer weiteren insgesamt bevorzugten Ausführungsform sind die ersten und/oder die zweiten Reibkupplungen identisch aufgebaut.

Hierdurch können die Kosten für den Antriebsstrang verringert werden, da viele Gleichteile verwendet werden können. Beispielsweise können die Eingangs- und die Ausgangsglieder der Reibkupplungen jeweils identisch ausgebildet sein. Ferner ist es möglich, jeweils zwei Kupplungen paarweise zusammenzufassen, wobei die Aktuatorik dieser paarweise zusammengefassten Reibkupplungen in der gleichen Achse wirkt.

Die Reibkupplungen können als nasslaufende Reibkupplungen ausgebildet sein, insbesondere als nasslaufende Lamellenkupplungen. Generell ist es jedoch auch denkbar, die Reibkupplungen als Trockenkupplungen auszubilden.

Je nach Ausführungsform sind mit dem erfindungsgemäßen Antriebsstrang bzw. dem erfindungsgemäßen Verfahren folgende Vorteile realisierbar.

Generell kann der Zusatzaufwand durch Nutzung von Symmetrien und durch einen hohen Anteil von Gleichteilen so gering wie möglich gehalten werden.

Durch die Torque-Vectoring-Funktion kann ein besonders sportliches Kurvenfahren möglich sein.

Die Reibkupplungen sind vorzugsweise sämtlich unabhängig voneinander ansteuerbar. Das Stufengetriebe des Antriebsstranges benötigt keine Hohlwellenkonstruktion.

Die Kupplungen können jeweils baugleich sein. Ferner kann die für die Ansteuerung der Kupplungen verwendete Aktuatorik jeweils baugleich sein.

Da die Kupplungen örtlich zusammengelegt werden können, ist ein gemeinsames Kühlölmanagement möglich. Insbesondere ist es möglich, das für die Reibkupplungen verwendete Kühlöl (bei nasslaufenden Reibkupplungen) in einem einzelnen Gehäuse vorzusehen. Eine aufwändige Trennung von Schmierfluid für das Getriebe und von Kühlfluid für die Reibkupplungen kann somit entfallen.

Durch die Möglichkeit, die beiden angetriebenen Räder einer angetriebenen Achse mit unterschiedlichen Übersetzungen anzutreiben, entfallen weitere Radsätze, wie sie beispielsweise im Stand der Technik gemäß dem Dokument DE 39 00 638 C2 vorgesehen sind.

Da die Reibkupplungen vorzugsweise auf der Ausgangsseite des Getriebes angeordnet werden können, ergibt sich eine einfachere Wärmeabfuhr. Dies gilt insbesondere, da die Reibkupplungen nicht in direkter Nachbarschaft zu einem Antriebsmotor wie einem Verbrennungsmotor angeordnet werden, wie bei herkömmlichen Doppelkupplungsgetrieben.

Generell ergeben sich für die Kupplungs-Aktuatorik mehr konstruktive Freiheitsgrade, da zum Beispiel die Enden von Zwischenwellen des Stufengetriebes in der Regel frei zugänglich sind.

Die elektrischen und hydraulischen Funktionen können in einem Steuergerät bzw. in einem Mechatronik-Modul integriert werden (nur ein SIL 3 System).

Insgesamt kann folglich, wie oben beschrieben, jedes angetriebene Rad der angetriebenen Achse jederzeit (außer während Gangwechseln) zu wählbaren Anteilen mit jeder vorhandenen Teilübersetzung angetrieben werden. Dies ermöglicht die Funktionalität des Antriebsstranges des Dokumentes DE 39 00 638 C2, ohne dass zusätzliche Übersetzungsstufen vorgesehen werden müssen. Ferner kann auch eine Funktionalität dargestellt werden, wie sie in dem Dokument DE 10 2004 046 008 A1 dargestellt ist. Mit anderen Worten kann die Torque-Vectoring-Funktion drehzahlgeführt (zweite Art) oder drehmomentgeführt (erste Art) durchgeführt werden. Ferner lässt sich auch die Funktionalität einer elektronisch steuerbaren Quersperre für die angetriebene Achse realisieren.

Ein herkömmliches mechanisches Differential ist für die angetriebene Achse des erfindungsgemäßen Antriebsstranges nicht erforderlich.

Die Antriebswellen sind folglich generell unabhängig voneinander drehbar und nicht mechanisch miteinander gekoppelt (es sei denn, die oben beschriebene Allrad-Funktionalität ist realisiert).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines erfindungsgemäßen Antriebsstranges;
- Fig. 2: eine schematische Schnittansicht durch eine weitere Ausführungsform eines erfindungsgemäßen Antriebsstranges;
- Fig. 3: eine schematische Schnittansicht durch eine weitere Ausführungsform eines erfindungsgemäßen Antriebsstranges;
- Fig. 3a: einen optionalen Zusatz für die Antriebsstränge der Fig. 2 oder 3;
- Fig. 4: eine Längsschnittansicht durch eine weitere Ausführungsform eines erfindungsgemäßen Antriebsstranges, bei dem ferner eine Allrad-Funktionalität realisiert ist;
- Fig. 5: eine schematische Schnittansicht durch eine weitere Ausführungsform eines erfindungsgemäßen Antriebsstranges, bei dem eine Allrad-Funktionalität realisiert ist;
- Fig. 6: eine schematische Schnittansicht durch eine weitere Ausführungsform eines erfindungsgemäßen Antriebsstranges, bei dem ein Antriebsmotor durch eine elektrische Maschine gebildet ist; und
- Fig. 7: eine abgewandelte Ausführungsform des Antriebsstranges der Fig. 6, wobei zusätzlich ein Verbrennungsmotor zur Realisierung einer Range-Extender-Funktion ankoppelbar ist.

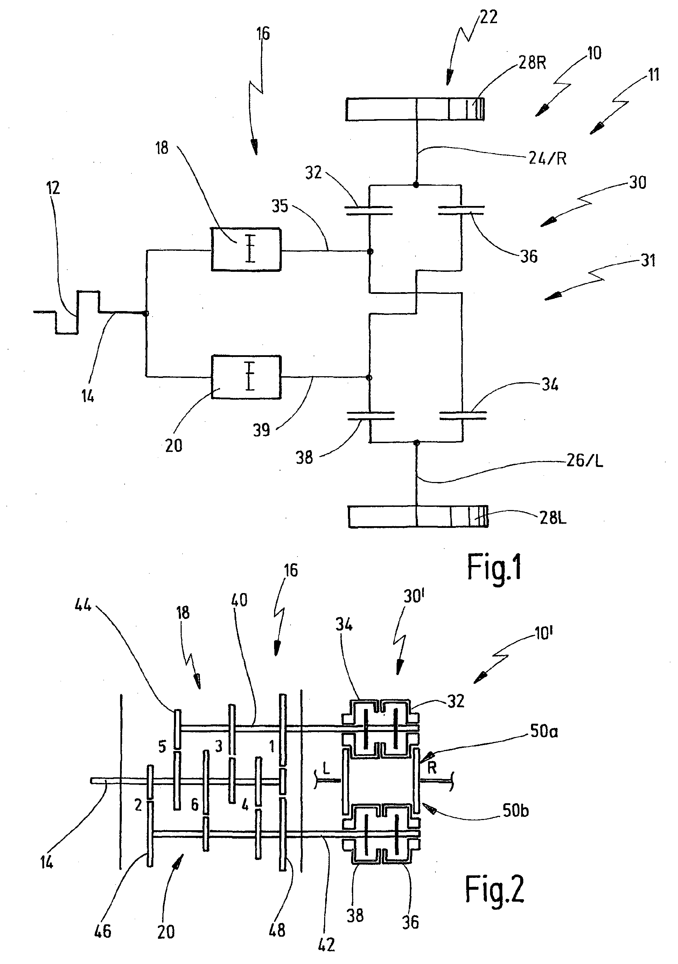

In Fig. 1 ist eine erste Ausführungsform eines erfindungsgemäßen Antriebsstranges schematisch dargestellt und generell mit 10 bezeichnet.

Der Antriebsstrang 10 dient zum Antrieb eines schematisch dargestellten Kraftfahrzeuges 11 und weist einen Antriebsmotor in Form eines Verbrennungsmotors 12 auf. Der Verbrennungsmotor 12 ist direkt mit einer einzelnen Getriebeeingangswelle 14 eines Stufengetriebes 16 verbunden. Das Stufengetriebe 16 weist ein erstes Teilgetriebe 18 und ein zweites Teilgetriebe 20 auf. Das erste Teilgetriebe 18 beinhaltet vorzugsweise ungerade Gangstufen. Das zweite Teilgetriebe 20 beinhaltet vorzugsweise gerade Gangstufen. Eine Rückwärtsgangstufe kann auf dem ersten oder auf dem zweiten Teilgetriebe 18, 20 angeordnet sein.

Der Antriebsstrang 10 beinhaltet ferner eine angetriebene Achse 22, mit einer ersten Antriebswelle 24, R, die mit einem ersten angetriebenen Rad 28R verbunden ist, und mit einer zweiten Antriebswelle 26, L, die mit einem zweiten angetriebenen Rad 28L verbunden ist.

Zwischen den Antriebswellen 24, 26 und dem Stufengetriebe 16 ist eine Kupplungsanordnung 30 angeordnet, die als Leistungsverzweigungseinrichtung dient, um über das Stufengetriebe 16 zugeführte Antriebsleistung auf die erste und die zweite Antriebswelle 24, 26 zu verteilen.

Die Kupplungsanordnung 30 beinhaltet eine erste Reibkupplung 32, deren Eingangsglied mit einem Ausgang 35 des ersten Teilgetriebes 18 verbunden ist. Ferner beinhaltet die Kupplungsanordnung 30 eine weitere erste Reibkupplung 34, deren Eingangsglied mit dem Ausgang 35 des ersten Teilgetriebes 18 verbunden ist. Die Kupplungsanordnung 30 weist ferner eine zweite Reibkupplung 36 auf, deren Eingangsglied mit einem Ausgang 39 des zweiten Teilgetriebes 20 verbunden ist, sowie eine weitere zweite Reibkupplung 38, deren Eingangsglied mit dem Ausgang 39 des zweiten Teilgetriebes 20 verbunden ist.

Die Ausgangsglieder der ersten, dem ersten Teilgetriebe 18 zugeordneten Reibkupplung 32 sowie der dem zweiten Teilgetriebe 20 zugeordneten zweiten Reibkupplung 36 sind mit der ersten Antriebswelle 24 starr verbunden. In entsprechender Weise sind ein Ausgangsglied der weiteren ersten Reibkupplung 34 und ein Ausgangsglied der weiteren zweiten Reibkupplung 38 starr mit der zweiten Antriebswelle 26 verbunden.

Von dem Antriebsmotor 12 erzeugte Antriebsleistung kann mit einer beliebigen Übersetzung des ersten Teilgetriebes 18 folglich auf das linke oder das rechte angetriebene Rad 28L, 28R übertragen werden. Parallel hierzu bzw. unabhängig hiervon kann Antriebsleistung von dem Antriebsmotor 12 über das zweite Teilgetriebe 20 dem linken oder dem rechten angetriebenen Rad 28L, 28R zugeführt werden.

Die vier Reibkupplungen 32, 34, 36, 38, die die Kupplungsanordnung 30 bilden, sind unabhängig voneinander ansteuerbar.

Bei einem normalen Fahrbetrieb wird in einem der zwei Teilgetriebe (beispielsweise Teilgetriebe 18) eine Gangstufe eingerichtet, und die dem ersten Teilgetriebe zugeordneten Reibkupplungen (hier 32, 34) werden geschlossen, um Antriebsleistung auf die zwei angetriebenen Räder 28L, 28R zu verteilen. In Kurvenfahrten kann dabei beispielsweise die dem kurveninneren Rad zugeordnete Reibkupplung mit einem geringeren Drehmoment angesteuert werden, um eine Doppelkupplung-Differentialfunktion und/oder ein Torque-Vectoring zu erzielen.

Zum Durchführen eines Gangwechsels werden die zwei ersten Reibkupplungen 32, 34 geöffnet, und überschneidend hiermit werden die zwei zweiten Reibkupplungen 36, 38 geschlossen, wobei in dem zweiten Teilgetriebe 20 eine Zielgangstufe vorgewählt ist. Hierdurch kann ein Gangwechsel von einer Quellgangstufe des ersten Teilgetriebes 18 zu der Zielgangstufe des zweiten Teilgetriebes 20 zugkraftunterbrechungsfrei erfolgen. In entsprechender Weise kann ein Gangwechsel von dem zweiten Teilgetriebe 20 auf das erste Teilgetriebe 18 erfolgen.

Zudem ist es möglich, bei einer Kurvenfahrt das kurveninnere Rad mit einer niedrigen Übersetzung anzutreiben, und das kurvenäußere Rad mit einer höheren Übersetzung, so dass das kurvenäußere Rad schneller dreht. Mit anderen Worten kann das kurveninnere Rad beispielsweise über das erste Teilgetriebe 18 und die erste Reibkupplung 32 angetrieben werden, und das kurvenäußere Rad kann beispielsweise über das zweite Teilgetriebe 20 (mit einer höheren Gangstufe als im ersten Teilgetriebe) und die zweite Reibkupplung 38 angetrieben werden (in diesem Fall sind die weitere erste Reibkupplung 34 und die weitere zweite Reibkupplung 36 geöffnet).

Sämtliche Reibkupplungen können geöffnet oder geschlossen werden oder können auf ein bestimmtes Drehmoment eingestellt werden, wozu sie im schlupfenden Zustand betätigt werden.

In den nachfolgenden Fig. 2 bis 5 sind weitere Ausführungsformen von Antriebssträngen dargestellt, die hinsichtlich Aufbau und Funktionsweise dem Antriebsstrang 10 der Fig. 1 entsprechen. Gleiche Elemente sind daher durch gleiche Bezugszeichen gekennzeichnet. Im Folgenden werden im Wesentlichen die Unterschiede erläutert.

Bei dem Antriebsstrang 10' der Fig. 2 weist das Stufengetriebe 16 eine erste Zwischenwelle 40 für das erste Teilgetriebe 18 und eine zweite Zwischenwelle 42 für das zweite Teilgetriebe 20 auf. Das erste Teilgetriebe 18 weist Gangstufen 1, 3, 5 auf, die durch Radsätze gebildet sind, die die Getriebeeingangswelle 14 und die erste Zwischenwelle 40 miteinander verbinden. Das zweite Teilgetriebe 20 weist Gangstufen 2, 4, 6 auf, die durch Radsätze gebildet sind, die die Getriebeeingangswelle 14 und die zweite Zwischenwelle 42 miteinander verbinden.

Es versteht sich, dass zum Schalten der Radsätze in an sich bekannter Weise Schaltkupplungen vorgesehen sind, die beispielsweise als Synchron-Schaltkupplungen ausgebildet sein können und vorzugsweise an den Zwischenwellen 40, 42 angeordnet sind (in diesem Fall sind die an den Zwischenwellen angeordneten Räder als Losräder ausgebildet, und die an der Getriebeeingangswelle 14 angeordneten Räder sind als Festräder ausgebildet).

Die Radsätze des ersten Teilgetriebes 18 werden gemeinschaftlich mit 44 bezeichnet. Die Radsätze des zweiten Teilgetriebes 20 werden gemeinschaftlich mit 46 bezeichnet.

Die erste Zwischenwelle 40 ist mit einem Doppelkupplungspaket 30' verbunden. Genauer gesagt ist die erste Zwischenwelle 40 mit Eingangsgliedern der zwei ersten Reibkupplungen 32, 34 verbunden, die in diesem Fall koaxial zu der ersten Zwischenwelle 40 angeordnet sind. In entsprechender Weise sind die zwei zweiten Reibkupplungen 36, 38 koaxial zu der zweiten Zwischenwelle 42 angeordnet, und Eingangsglieder dieser zwei zweiten Reibkupplungen 36, 38 sind mit der zweiten Zwischenwelle 42 verbunden.

Ausgangsglieder der zwei ersten Reibkupplungen 32, 34 stehen über eine erste Übersetzungsstufe 50a mit der linken bzw. der rechten Antriebswelle L, R in Verbindung. In entsprechender Weise stehen Ausgangsglieder der zwei zweiten Reibkupplungen 36, 38 über eine zweite Übersetzungsstufe 50b mit der linken bzw. der rechten Antriebswelle L, R in Verbindung.

Als Anfahrgangstufe ist die Gangstufe 1 vorgesehen. Um die Belastung der ersten Reibkupplungen 32, 34 zu verringern, ist in dem zweiten Teilgetriebe 20 ein zusätzlicher Radsatz vorgesehen, und zwar in Form eines Zusatzradsatzes 48, der die gleiche Übersetzung einrichtet wie die Gangstufe 1 des ersten Teilgetriebes 18.

Bei dieser Ausführungsform kann ein Anfahrvorgang durchgeführt werden, indem alle vier Kupplungen 32, 34, 36, 38 betätigt werden, so dass die Belastung für die einzelne Kupplung deutlich verringert ist.

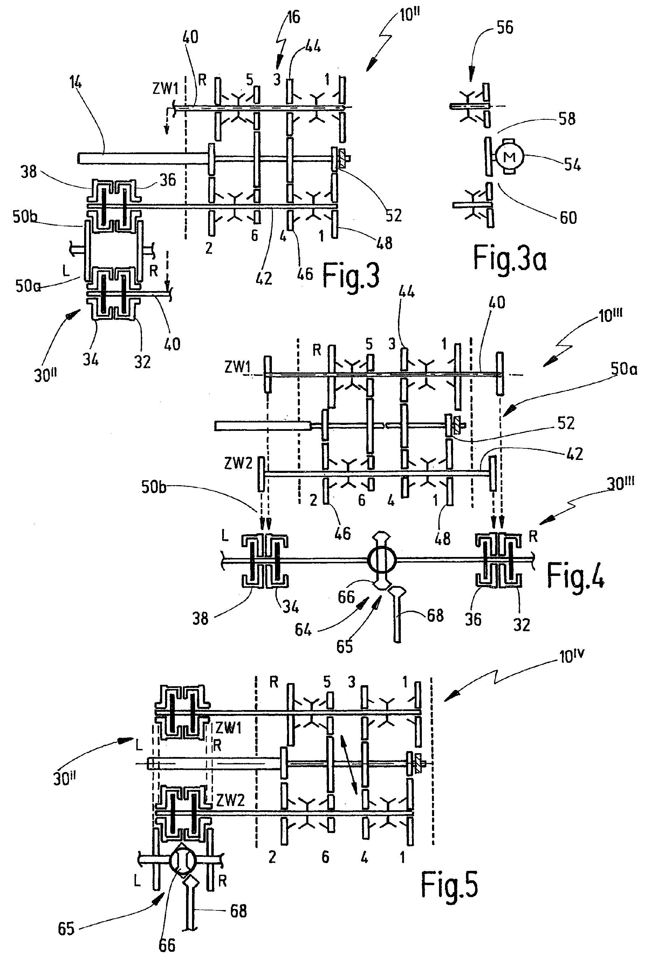

Der in Fig. 3 gezeigte Antriebsstrang 10" entspricht hinsichtlich Aufbau und Funktionsweise generell dem Antriebsstrang der Fig. 2. Im Folgenden werden im Wesentlichen die Unterschiede erläutert.

Während die Kupplungsanordnung 30' bei dem Antriebsstrang 10' der Fig. 2 auf der dem Antriebsmotor 12 abgewandten Seite des Getriebes 16 angeordnet ist, ist die Kupplungsanordnung 30" der Fig. 3 im Bereich der Eingangsseite des Getriebes 16 angeordnet.

Es ist ferner zu erkennen, dass der Zusatzradsatz 48 bei der Ausführungsform der Fig. 3 ein separates Festrad 52 aufweist. Während bei der Ausführungsform der Fig. 2 an der Getriebeeingangswelle 14 nur ein einzelnes Festrad für die Gangstufe 1 vorgesehen ist, das mit einem Losrad des ersten Teilgetriebes 18 und mit dem Zusatzlosrad 48 in dem zweiten Teilgetriebe 20 in Eingriff steht, ist bei der Ausführungsform der Fig. 3 ein separates Festrad 52 für den Zusatzradsatz 48 vorgesehen. Hierdurch können unterschiedliche Achsabstände kompensiert werden, um an den Zwischenwellen 40, 42 die gleiche Übersetzung für die Anfahrgangstufe 1 einzurichten.

Ferner ist in Fig. 3a gezeigt, dass die Antriebsstränge mit einer elektrischen Maschine 54 kombinierbar sind, um eine Hybrid-Funktionalität einzurichten. Dabei kann die elektrische Maschine 54 generell mit der Getriebeeingangswelle 14 verbunden sein. Vorzugsweise ist die elektrische Maschine 54 jedoch wie gezeigt über eine Schaltkupplungsanordnung 56 alternativ mit der ersten Zwischenwelle 40 oder mit der zweiten Zwischenwelle 42 verbindbar. Ferner ist zwischen der elektrischen Maschine 54 und der ersten Zwischenwelle 40 eine Übersetzungsstufe 58 eingerichtet, und zwischen der elektrischen Maschine 54 und der zweiten Zwischenwelle 42 ist eine weitere Übersetzungsstufe 60 eingerichtet.

Die elektrische Maschine 40 kann auch dazu verwendet werden, um bei Gangwechseln in niedrigen Gangstufen eine Drehmomentstütze zu bilden.

Hierdurch kann die Belastung für die Reibkupplungen weiter verringert werden.

Die in Fig. 3a gezeigte Anordnung lässt sich sowohl mit dem Antriebsstrang 10' der Fig. 2 kombinieren, als auch mit dem Antriebsstrang 10" der Fig. 3 und ebenso mit dem Antriebsstrang 10'" der Fig. 4.

Der Antriebsstrang 10'" der Fig. 4 entspricht hinsichtlich Aufbau und Funktionsweise generell dem Antriebsstrang 10' der Fig. 2. Allerdings sind die ersten Reibkupplungen 32, 34, die dem ersten Teilgetriebe 18 zugeordnet sind, auf axial gegenüberliegenden Enden des Getriebes 16 an die erste Zwischenwelle 40 angebunden. In entsprechender Weise sind die zwei zweiten Reibkupplungen 36, 38 an axial gegenüberliegenden Enden des Getriebes 16 an die zweite Zwischenwelle 42 angebunden. Bei dieser Ausführungsform bilden die erste Reibkupplung 32 und die zweite Reibkupplung 36, die der rechten Antriebswelle R zugeordnet sind, ein Kupplungspaket. Die erste Reibkupplung 34 und die zweite Reibkupplung 38 bilden axial beabstandet hiervon ein zweites Kupplungspaket, das der zweiten Antriebswelle L zugeordnet ist.

Die Antriebswellen L, R sind bei den oben beschriebenen Ausführungsformen und auch bei dieser Ausführungsform generell unabhängig voneinander drehbar.

In Fig. 4 ist jedoch eine Variante gezeigt, bei der die Antriebswellen L, R über ein mechanisches Differential 65 miteinander gekoppelt sind, um einen Achsantrieb 64 für eine weitere angetriebene Achse (nicht dargestellt) zu bilden. Genauer gesagt sind die Antriebswellen 24, 26 mit Seitenrädern des Differentials 65 verbunden, wohingegen der Differentialkorb 66 mit einer Längswelle 68 verbunden ist, die mit der zweiten angetriebenen Achse verbunden ist. Das mechanische Differential wird folglich umgekehrt betrieben wie ein herkömmliches mechanisches Differential.

In Fig. 5 ist ein weiterer Antriebsstrang 10^{IV} gezeigt, der dem Antriebsstrang 10" der Fig. 3 entspricht. Hierbei ist zusätzlich eine Allrad-Funktionalität eingerichtet, indem die linke und die rechte Antriebswelle L, R über ein Differential 65 miteinander verbunden sind, dessen Differentialkorb 66 mit einer Längswelle 68 verbunden ist, so dass sich die gleiche Funktionalität wie bei der Ausführungsform der Fig. 4 ergibt.

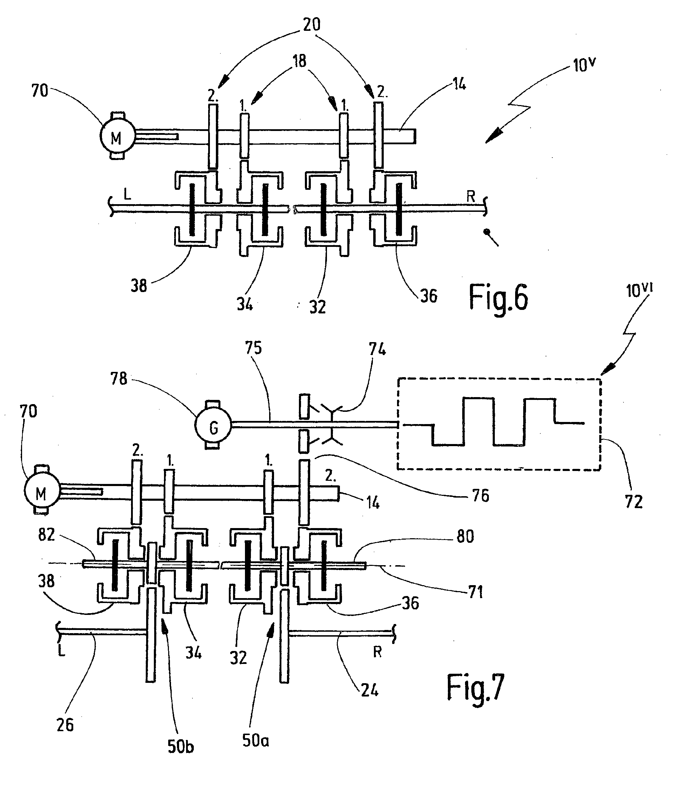

In den Fig. 6 und 7 sind weitere Ausführungsformen von erfindungsgemäßen Antriebssträngen gezeigt. Diese entsprechen hinsichtlich Aufbau und Funktionalität generell dem Antriebsstrang 10 der Fig. 1. Anstelle eines Verbrennungsmotors ist als Antriebsmotor jedoch eine elektrische Maschine 70 vorgesehen.

Die elektrische Maschine 70 ist mit einer einzelnen Getriebeeingangswelle 14 verbunden, und zwar direkt, ohne Zwischenschaltung einer Kupplung.

An der Getriebeeingangswelle 14 sind zwei Festräder für eine erste Gangstufe 1 festgelegt, sowie zwei Festräder für eine Gangstufe 2. Im vorliegenden Fall ist der Antriebsstrang 10^{V} der Fig. 6 als Antriebsstrang für ein elektrisches Fahrzeug ausgelegt, wobei das Stufengetriebe nur zwei Gangstufen aufweist.

Um die oben beschriebene Funktionalität zu erzielen, sind dabei die Radsätze für die Gangstufen gedoppelt, wobei die vier Reibkupplungen 32, 34, 36, 38 sämtlich koaxial zu den Antriebswellen L, R angeordnet sind. Die mit den Festrädern für die Gangstufen 1 und 2 in Eingriff stehenden Losräder sind dabei ebenfalls an der linken bzw. rechten Antriebswelle L, R drehbar gelagert.

Im vorliegenden Fall dienen die Reibkupplungen auch als Schaltkupplungen zum Ein- und Auslegen der Gangstufen.

In Fig. 7 ist eine Abwandlung der in Fig. 6 gezeigten Ausführungsform gezeigt, und zwar in Form eines Antriebsstranges 10^{VI}.

Bei dieser Ausführungsform sind die vier Reibkupplungen 32, 34, 36, 38, die koaxial zu den Losrädern angeordnet sind, die mit den Festrädern für die Gangstufen 1 und 2 in Eingriff stehen, koaxial zueinander angeordnet, jedoch auf einer Achse 71, die parallel zu den Antriebswellen L, R verläuft. Genauer gesagt sind die erste Reibkupplung 32 und die zweite Reibkupplung 36 an einer ersten Zwischenwelle 80 angeordnet, die über eine erste Übersetzungsstufe 50a mit der rechten Antriebswelle 24, R in Verbindung steht. In entsprechender Weise sind die weitere erste Reibkupplung 34 und die weitere zweite Reibkupplung 38 an einer zweiten Zwischenwelle 82 angeordnet, die über eine weitere Übersetzungsstufe 50b mit der linken Antriebswelle 26, L verbunden ist.

Bei dieser Ausführungsform können die Reibkupplungen jeweils kleiner dimensioniert werden, da sie mit geringeren Drehmomenten beaufschlagt werden. Wie in Fig. 6 wird mit den Trennkupplungen 38 und 36 die zweite Gangstufe und mit den Trennkupplungen 32 und 34 die erste Gangstufe geschaltet.

Bei den Ausführungsformen der Fig. 6 und 7 sind die Antriebsstränge 10^{V}, 10^{VI} generell für Elektrofahrzeuge ausgelegt. In beiden Fällen können die Antriebsstränge jedoch auch als Range-Extender-Antriebsstränge ausgelegt sein. In diesem Fall kann ein Verbrennungsmotor 72 vorgesehen sein, der über eine Schaltkupplungsanordnung 74 mit der Getriebeeingangswelle 14 koppelbar ist. Im vorliegenden Fall ist eine Motorwelle 75 des Verbrennungsmotors 72 mit einem Generator 78 verbunden, und die Motorwelle 75 kann über die Schaltkupplungsanordnung 74 und gegebenenfalls eine Übersetzungsstufe 76 mit der Getriebeeingangswelle 14 verbunden werden. Ein mit dem Verbrennungsmotor 72 koppelbarer, optional vorgesehener Generator ist bei 78 gezeigt. Im normalen Fahrbetrieb wird eine nicht dargestellte Batterie des Antriebsstranges aufgeladen, indem der Verbrennungsmotor 72 betrieben wird und der Generator 78 elektrische Leistung erzeugt. Die elektrische Leistung kann von der elektrischen Maschine 70 zum Antrieb des Kraftfahrzeuges entnommen werden. Ferner ist es möglich, das Fahrzeug allein mittels des Verbrennungsmotors 72 anzutreiben, wozu die Schaltkupplungsanordnung 74 geschlossen wird. In diesem Fall müssen allerdings die elektrische Maschine 70 und der Generator 78 mitgeschleppt werden, sofern keine Trennkupplungen vorgesehen sind. Bei geöffneten Reibkupplungen 32, 34, 36, 38 kann der Verbrennungsmotor 72 mittels der elektrischen Maschine 70 gestartet werden, wozu die Schaltkupplungsanordnung 74 ebenfalls geschlossen wird.

## Patentansprüche

1. Antriebsstrang (10) für ein Kraftfahrzeug (11), mit einer Antriebseinheit, die einen Antriebsmotor (12; 70) aufweist, einem Stufengetriebe (16), das einen Getriebeeingang (14) und ein erstes Teilgetriebe (18) und ein zweites Teilgetriebe (20) aufweist, und mit einer Leistungsverzweigungseinrichtung (31), die Antriebsleistung auf eine erste und eine zweite Antriebswelle (24, R; 26, L) einer angetriebenen Achse (22) verteilt,
**dadurch gekennzeichnet, dass**
der Antriebsmotor (12; 70) direkt mit dem Getriebeeingang (14) verbunden ist, wobei jeder der zwei Antriebswellen (24, R; 26, L) eine erste und eine zweite Reibkupplung (32, 34; 36, 38) zugeordnet ist, wobei die ersten Reibkupplungen (32, 34) die jeweilige Antriebswelle (24, R; 26, L) mit dem ersten Teilgetriebe (18) verbinden und wobei die zweiten Reibkupplungen (36, 38) die jeweilige Antriebswelle (24, R; 26, L) mit dem zweiten Teilgetriebe (20) verbinden, derart, dass die ersten Reibkupplungen (32, 34) und die zweiten Reibkupplungen (36, 38) die Leistungsverzweigungseinrichtung (31) bilden.

2. Antriebsstrang nach Anspruch 1, **dadurch gekennzeichnet, dass** der Antriebsmotor einen Verbrennungsmotor (12) aufweist.

3. Antriebsstrang nach Anspruch 1 oder 2, **dadurch gekennzeichnet, dass** das erste Teilgetriebe (18) eine erste Zwischenwelle (40) aufweist, wobei Gangstufen des ersten Teilgetriebes (18) durch Radsätze gebildet sind, die eine Getriebeeingangswelle (14) mit der ersten Zwischenwelle (40) verbinden, und/oder wobei das zweite Teilgetriebe (20) eine zweite Zwischenwelle (42) aufweist, wobei Gangstufen (42) des zweiten Teilgetriebes durch Radsätze gebildet sind, die die Getriebeeingangswelle (14) mit der zweiten Zwischenwelle (42) verbinden.

4. Antriebsstrang nach einem der Ansprüche 1 bis 3, **dadurch gekennzeichnet, dass** die ersten Reibkupplungen (32, 34) koaxial zu einer Welle (40) des ersten Teilgetriebes (18) angeordnet sind und/oder wobei die zweiten Reibkupplungen (36, 38) koaxial zu einer Welle (42) des zweiten Teilgetriebes (20) angeordnet sind.

5. Antriebsstrang nach Anspruch 1, **dadurch gekennzeichnet, dass** der Antriebsmotor eine elektrische Maschine (70) aufweist.

6. Antriebsstrang nach Anspruch 5, **dadurch gekennzeichnet, dass** das erste Teilgetriebe (18) eine einzelne erste Gangstufe (1) aufweist und/oder wobei das zweite Teilgetriebe (20) eine einzelne zweite Gangstufe (2) aufweist.

7. Antriebsstrang nach Anspruch 6, **dadurch gekennzeichnet, dass** das Stufengetriebe (16) eine einzelne Getriebeeingangswelle (14) aufweist, an der zwei Festräder für die erste Gangstufe (1) festgelegt sind, die mit Losrädern in Eingriff stehen, die mittels der ersten Reibkupplungen (32, 34) in den Leistungsfluss schaltbar sind, und an der zwei weitere Festräder für die zweite Gangstufe (2) festgelegt sind, die mit Losrädern in Eingriff stehen, die mittels der zweiten Reibkupplungen (36, 38) in den Leistungsfluss schaltbar sind, um Antriebsleistung auf die zwei Antriebswellen (L, R) zu verteilen.

8. Antriebsstrang nach einem der Ansprüche 5 bis 7, **dadurch gekennzeichnet, dass** die Antriebseinheit einen Verbrennungsmotor (72) aufweist, der mittels einer Schaltkupplungsanordnung (74) mit dem Getriebeeingang verbindbar ist.

9. Antriebsstrang nach einem der Ansprüche 1 bis 8, **dadurch gekennzeichnet, dass** beide Teilgetriebe (18, 20) eine Anfahrgangstufe (1) mit der gleichen Übersetzung aufweisen, derart, dass ein Anfahrvorgang mittels der beiden ersten und mittels der beiden zweiten Reibkupplungen (32, 34; 36, 38) erfolgen kann.

10. Antriebsstrang nach einem der Ansprüche 1 bis 9, **dadurch gekennzeichnet, dass** die erste und die zweite Reibkupplung (32, 34; 36, 38) der ersten und/oder der zweiten Antriebswelle (24, R; 26, L) koaxial zu der ersten und/oder der zweiten Antriebswelle (24, R; 26, L) angeordnet sind.

11. Antriebsstrang nach einem der Ansprüche 1 bis 10, **dadurch gekennzeichnet, dass** die ersten und/oder die zweiten Reibkupplungen (32, 34; 36, 38) als Anfahrkupplungen ausgelegt sind.

12. Antriebsstrang nach einem der Ansprüche 1 bis 11, **dadurch gekennzeichnet, dass** die erste und die zweite Antriebswelle (24, R; 26, L) über ein mechanisches Differential miteinander gekoppelt sind, dessen Differentialkorb (66) mit einer Längswelle (68) verbunden ist, die mit einer zweiten angetriebenen Achse verbunden ist.

13. Antriebsstrang nach einem der Ansprüche 1 bis 12, **dadurch gekennzeichnet, dass** Ausgangsglieder der ersten und der zweiten Reibkupplungen (32, 34; 36, 38) über eine Übersetzungsstufe (50) mit den Antriebswellen (24, R; 26, L) verbunden sind.

14. Verfahren zum Betreiben eines Antriebsstranges (10) ,für ein Kraftfahrzeug (11), mit einer Antriebseinheit, die einen Antriebsmotor (12; 70) aufweist, einem Stufengetriebe (16), das einen Getriebeeingang (14) und ein erstes Teilgetriebe (18) und ein zweites Teilgetriebe (20) aufweist, und mit einer Leistungsverzweigungseinrichtung (31), die Antriebsleistung auf eine erste und eine zweite Antriebswelle (24, R; 26, L) einer angetriebenen Achse (22) verteilt, wobei der Antriebsmotor (12; 70) direkt mit dem Getriebeeingang (14) verbunden ist, wobei jeder der zwei Antriebswellen (24, R; 26, L) eine erste und eine zweite Reibkupplung (32, 34; 36, 38) zugeordnet ist, wobei die ersten Reibkupplungen (32, 34) die jeweilige Antriebswelle (24, R; 26, L) mit dem ersten Teilgetriebe (18) verbinden und wobei die zweiten Reibkupplungen (36, 38) die jeweilige Antriebswelle (24, R; 26, L) mit dem zweiten Teilgetriebe (20) verbinden, derart, dass die ersten Reibkupplungen (32, 34) und die zweiten Reibkupplungen (36, 38) die Leistungsverzweigungseinrichtung (31) bilden, wobei beide Teilgetriebe (18, 20) eine Anfahrgangstufe (1) mit der gleichen Übersetzung aufweisen, wobei ein Anfahrvorgang durch gleichzeitiges Schließen der ersten und der zweiten Reibkupplung (32, 34; 36, 38) erfolgt.

15. Verfahren zum Betreiben eines Antriebsstranges (10), wobei der Antriebsstrang (10) eine Antriebseinheit, ein Getriebe (16) mit einem ersten und einem zweiten Teilgetriebe (18, 20) sowie eine angetriebene Achse (22) mit einer ersten Antriebswelle (24, R) und einer zweiten Antriebswelle (26, L) aufweist, wobei jeder der zwei Antriebswellen (24, R; 26, L) eine erste und eine zweite Reibkupplung (32, 34; 36, 38) zugeordnet ist, wobei die ersten Reibkupplungen (32, 34) die jeweilige Antriebswelle (24, R; 26, L) mit dem ersten Teilgetriebe (18) verbinden und wobei die zweiten Reibkupplungen (36, 38) die jeweilige Antriebswelle (24, R; 26, L) mit dem zweiten Teilgetriebe (20) verbinden, mit dem Schritt, bei einer Kurvenfahrt die eine Antriebswelle über die erste Reibkupplung (32, 34) und das erste Teilgetriebe (18) mit der Antriebseinheit zu verbinden und die andere Antriebswelle über die zweite Reibkupplung (36, 38) und das zweite Teilgetriebe (20) mit der Antriebseinheit zu verbinden.

## Claims

1. A drive train (10) for a motor vehicle (11), having a drive unit which comprises a prime mover (12; 70), a multi-step transmission (16) which comprises a transmission input (14) and a first sub-transmission (18) and a second sub-transmission (20), and having a power-splitting device (31) which distributes the driving power between a first and a second drive shaft (24, R; 26, L) of a driven axle (22),
**characterized in that**
the prime mover (12; 70) is directly connected to the transmission input (14), wherein each of the two drive shafts (24, R; 26, L) is assigned a first and a second friction clutch (32, 34; 36, 38), wherein the first friction clutches (32, 34) connect the respective drive shaft (24, R; 26, L) to the first sub-transmission (18) and wherein the second friction clutches (36, 38) connect the respective drive shaft (24, R; 26, L) to the second sub-transmission (20), such that the first friction clutches (32, 34) and the second friction clutches (36, 38) form the power-splitting device (31).

2. The drive train as claimed in claim 1, **characterized in that** the prime mover comprises an internal combustion engine (12).

3. The drive train as claimed in claim 1 or 2, **characterized in that** the first sub-transmission (18) comprises a first intermediate shaft (40), wherein gear ratios of the first sub-transmission (18) are formed by wheel sets, which connect a transmission input shaft (14) to the first intermediate shaft (40), and/or wherein the second sub-transmission (20) comprises a second intermediate shaft (42), wherein gear ratios (42) of the second sub-transmission are formed by wheel sets, which connect the transmission input shaft (14) to the second intermediate shaft (42).

4. The drive train as claimed in one of the claims 1 to 3, **characterized in that** the first friction clutches (32, 34) are arranged coaxially to a shaft (40) of the first sub-transmission (18) and/or the second friction clutches (36, 38) are arranged coaxially to a shaft (42) of the second sub-transmission (20).

5. The drive train as claimed in claim 1, **characterized in that** the prime mover comprises an electric motor (70).

6. The drive train as claimed in claim 5, **characterized in that** the first sub-transmission (18) comprises a single first gear ratio (1) and/or wherein the second sub-transmission (20) comprises a single second gear ratio (2)

7. The drive train as claimed in claim 6, **characterized in that** the multi-step transmission (16) comprises a single transmission input shaft (14), on which two fixed wheels for the first gear ratio (1) are fixed, which engage with loose wheels, which loose wheels can be shifted by means of the first friction clutches (32, 34) in the power flow, and on which single transmission input shaft (14) two further fixed wheels for the second gear ratio (2) are fixed, said further fixed wheels engaging with loose wheels, which can be shifted by means of the second friction clutches (36, 38) in the power flow, in order to distribute the driving power between the two drive shafts (L, R).

8. The drive train according to one of the claims 5 to 7, **characterized in that** the drive unit comprises an internal combustion engine (72), which can be connected to the transmission input by means of a shifting clutch arrangement (74).

9. The drive train as claimed in one of the claims 1 to 8, **characterized in that** both sub-transmissions (18, 20) comprise a starting gear ratio (1) with the same transmission ratio, such that starting can take place by means of the two first and by means of the two second friction clutches (32, 34; 36, 38).

10. The drive train as claimed in one of the claims 1 to 9, **characterized in that** the first and second friction clutch (32, 34; 36, 38) of the first and/or the second drive shaft (24, R; 26, L) are arranged coaxially to the first and/or the second drive shaft (24, R; 26, L).

11. The drive train as claimed in one of the claims 1 to 10, **characterized in that** the first and/or the second friction clutches (32, 34; 36, 38) are configured as starting clutches.

12. The drive train as claimed in one of the claims 1 to 11, **characterized in that** the first and the second drive shaft (24, R; 26, L) are connected to one another via a mechanical differential, the differential cage (66) of which is connected to a longitudinal shaft (68), which is connected to a second driven axle.

13. The drive train as claimed in one of the claims 1 to 12, **characterized in that** output members of the first and second friction clutches (32, 34; 36, 38) are connected via a transmission step (50) to the drive shafts (24, R; 26, L).

14. A method of operating a drive train (10) for a motor vehicle (11), having a drive unit which comprises a prime mover (12; 70), a multi-step transmission (16) which comprises a transmission input (14) and a first sub-transmission (18) and a second sub-transmission (20), and having a power-splitting device (31) which distributes the driving power between a first and a second drive shaft (24, R; 26, L) of a driven axle (22), wherein the prime mover (12; 70) is directly connected to the transmission input (14), wherein each of the two drive shafts (24, R; 26, L) is assigned a first and a second friction clutch (32, 34; 36, 38), wherein the first friction clutches (32, 34) connect the respective drive shaft (24, R; 26, L) to the first sub-transmission (18) and wherein the second friction clutches (36, 38) connect the respective drive shaft (24, R; 26, L) to the second sub-transmission (20), such that the first friction clutches (32, 34) and the second friction clutches (36, 38) form the power-splitting device (31), wherein both sub-transmissions (18, 20) comprise a starting gear ratio (1) with the same transmission ratio, wherein starting is achieved by simultaneously engaging the first and the second friction clutch (32, 34; 36, 38).

15. The method of operating a drive train (10), wherein the drive train (10) comprises a drive unit, a transmission (16) having a first and a second sub-transmission (18, 20) and also a driven axle (22) having a first drive shaft (24, R) and a second drive shaft (26, L), wherein a first and a second friction clutch (32, 34; 36, 38) are assigned to each of the two drive shafts (24, R; 26, L), wherein the first friction clutches (32, 34) connect the respective drive shaft (24, R; 26, L) to the first sub-transmission (18) and wherein the second friction clutches (36, 38) connect the respective drive shaft (24, R; 26, L) to the second sub-transmission (20), with the step of connecting the one drive shaft via the first friction clutch (32, 34) and the first sub-transmission (18) to the drive unit and connecting the other drive shaft via the second friction clutch (36, 38) and the second sub-transmission (20) to the drive unit when cornering.

## Revendications

1. Chaîne cinématique (10) pour un véhicule automobile (11), comprenant une unité d'entraînement, qui présente un moteur d'entraînement (12 ; 70), une transmission étagée (16) qui présente une entrée de transmission (14) et une première transmission partielle (18) et une deuxième transmission partielle (20), et comprenant un dispositif à répartition de puissance (31) qui répartit la puissance d'entraînement sur un premier et un deuxième arbre d'entraînement (24, R ; 26, L) d'un essieu entraîné (22),
**caractérisée en ce que**
le moteur d'entraînement (12 ; 70) est connecté directement à l'entrée de transmission (14), chacun des deux arbres d'entraînement (24, R ; 26, L) étant associé à un premier et à un deuxième embrayage à friction (32, 34 ; 36, 38), les premiers embrayages à friction (32, 34) connectant l'arbre d'entraînement respectif (24, R ; 26, L) à la première transmission partielle (18) et les deuxièmes embrayages à friction (36, 38) connectant l'arbre d'entraînement respectif (24, R ; 26, L) à la deuxième transmission partielle (20), de telle sorte que les premiers embrayages à friction (32, 34) et les deuxièmes embrayages à friction (36, 38) constituent le dispositif à répartition de puissance (31).

2. Chaîne cinématique selon la revendication 1, **caractérisée en ce que** le moteur d'entraînement présente un moteur à combustion interne (12).

3. Chaîne cinématique selon la revendication 1 ou 2, **caractérisée en ce que** la première transmission partielle (18) présente un premier arbre intermédiaire (40), des étages de rapport de la première transmission partielle (18) étant formés par des jeux de pignons qui relient un arbre d'entrée de transmission (14) au premier arbre intermédiaire (40), et/ou la deuxième transmission partielle (20) présentant un deuxième arbre intermédiaire (42), des étages de rapport (42) de la deuxième transmission partielle étant formés par des jeux de pignons qui relient l'arbre d'entrée de transmission (14) au deuxième arbre intermédiaire (42).

4. Chaîne cinématique selon l'une quelconque des revendications 1 à 3, **caractérisée en ce que** les premiers embrayages à friction (32, 34) sont disposés coaxialement par rapport à un arbre (40) de la première transmission partielle (18) et/ou dans laquelle les deuxièmes embrayages à friction (36, 38) sont disposés coaxialement par rapport à un arbre (42) de la deuxième transmission partielle (20).

5. Chaîne cinématique selon la revendication 1, **caractérisée en ce que** le moteur d'entrainement présente une machine électrique (70).

6. Chaîne cinématique selon la revendication 5, **caractérisée en ce que** la première transmission partielle (18) présente un premier étage de rapport individuel (1) et/ou dans laquelle la deuxième transmission partielle (20) présente un deuxième étage de rapport individuel (2).

7. Chaîne cinématique selon la revendication 6, **caractérisée en ce que** la transmission étagée (16) présente un arbre d'entrée de transmission individuel (14) sur lequel sont fixés deux pignons fixes pour le premier étage de rapport (1), lesquels sont en prise avec des pignons fous qui peuvent être raccordés dans le flux de puissance au moyen des premiers embrayages à friction (32, 34) et sur lequel sont fixés deux autres pignons fixes pour le deuxième étage de rapport (2), lesquels sont en prise avec des pignons fous qui peuvent être raccordés dans le flux de puissance au moyen des deuxièmes embrayages à friction (36, 38) afin de répartir la puissance d'entraînement sur les deux arbres d'entraînement (L, R).

8. Chaîne cinématique selon l'une quelconque des revendications 5 à 7, **caractérisée en ce que** l'unité d'entraînement présente un moteur à combustion interne (72) qui peut être connecté au moyen d'un agencement d'embrayage à changement de vitesses (74) à l'entrée de transmission.

9. Chaîne cinématique selon l'une quelconque des revendications 1 à 8, **caractérisée en ce que** les deux transmissions partielles (18, 20) présentent un étage de rapport de démarrage (1) avec le même rapport de démultiplication, de telle sorte qu'une opération de démarrage puisse s'effectuer au moyen des deux premiers embrayages à friction et au moyen des deux deuxièmes embrayages à friction (32, 34 ; 36, 38).

10. Chaîne cinématique selon l'une quelconque des revendications 1 à 9, **caractérisée en ce que** le premier et le deuxième embrayage à friction (32, 34 ; 36, 38) du premier et/ou du deuxième arbre d'entraînement (24, R ; 26, L) sont disposés coaxialement par rapport au premier et/ou au deuxième arbre d'entraînement (24, R ; 26, L).

11. Chaîne cinématique selon l'une quelconque des revendications 1 à 10, **caractérisée en ce que** les premiers et/ou les deuxièmes embrayages à friction (32, 34 ; 36, 38) sont réalisés sous forme d'embrayages de démarrage.

12. Chaîne cinématique selon l'une quelconque des revendications 1 à 11, **caractérisée en ce que** le premier et le deuxième arbre d'entraînement (24, R ; 26, L) sont accouplés l'un à l'autre par le biais d'un différentiel mécanique dont la coquille de différentiel (66) est connectée à un arbre longitudinal (68) qui est connecté à un deuxième essieu entraîné.

13. Chaîne cinématique selon l'une quelconque des revendications 1 à 12, **caractérisée en ce que** des organes de sortie des premiers et des deuxièmes embrayages à friction (32, 34 ; 36, 38) sont connectés par le biais d'un étage de démultiplication (50) aux arbres d'entraînement (24, R ; 26, L).

14. Procédé pour faire fonctionner une chaîne cinématique (10) pour un véhicule automobile (11), comprenant une unité d'entraînement qui présente un moteur d'entraînement (12 ; 70), une transmission étagée (16), qui présente une entrée de transmission (14) et une première transmission partielle (18) et une deuxième transmission partielle (20), et comprenant un dispositif à répartition de puissance (31) qui répartit la puissance d'entraînement sur un premier et un deuxième arbre d'entraînement (24, R ; 26, L) d'un essieu entraîné (22), le moteur d'entraînement (12 ; 70) étant connecté directement à l'entrée de transmission (14), chacun des deux arbres d'entraînement (24, R ; 26, L) étant associé à un premier et à un deuxième embrayage à friction (32, 34 ; 36, 38), les premiers embrayages à friction (32, 34) connectant l'arbre d'entraînement respectif (24, R ; 26, L) à la première transmission partielle (18) et les deuxièmes embrayages à friction (36, 38) connectant l'arbre d'entraînement respectif (24, R ; 26, L) à la deuxième transmission partielle (20), de telle sorte que les premiers embrayages à friction (32, 34) et les deuxièmes embrayages à friction (36, 38) constituent le dispositif à répartition de puissance (31), les deux transmissions partielles (18, 20) présentant un étage de rapport de démarrage (1) avec le même rapport de démultiplication, une opération de démarrage s'effectuant par fermeture simultanée du premier et du deuxième embrayage à friction (32, 34 ; 36, 38).

15. Procédé pour faire fonctionner une chaîne cinématique (10), dans lequel la chaîne cinématique (10) présente une unité d'entraînement, une transmission (16) avec une première et une deuxième transmission partielle (18, 20) ainsi qu'un essieu entraîné (22) avec un premier arbre d'entraînement (24, R) et un deuxième arbre d'entraînement (26, L), chacun des deux arbres d'entraînement (24, R; 26, L) étant associé à un premier et à un deuxième embrayage à friction (32, 34 ; 36, 38), les premiers embrayages à friction (32, 34) connectant l'arbre d'entraînement respectif (24, R ; 26, L) à la première transmission partielle (18) et les deuxièmes embrayages à friction (36, 38) connectant l'arbre d'entraînement respectif (24, R ; 26, L) à la deuxième transmission partielle (20), comprenant l'étape dans laquelle, dans un passage en virage, l'un des arbres d'entraînement est connecté par le biais du premier embrayage à friction (32, 34) et de la première transmission partielle (18) à l'unité d'entraînement et l'autre arbre d'entraînement est connecté par le biais du deuxième embrayage à friction (36, 38) et de la deuxième transmission partielle (20) à ['unité d'entraînement.
